# FASCICULE DE BREVET EUROPEEN

(11) **EP 4 470 388 B1**
(45) Date de publication et mention de la délivrance du brevet: **22.10.2025**
(21) Numéro de dépôt: 24172100.0
(22) Date de dépôt: 24.04.2024
(51) Int. Cl.: A23L 2/04, A23L 2/70, A23L 33/20, F26B 3/092, A23L 19/00, A23B 2/95

(54) **PROCÉDÉ DE PRODUCTION DE JUS DE POMME**
VERFAHREN ZUR HERSTELLUNG VON APFELSAFT
METHOD FOR PRODUCING APPLE JUICE

(30) Priorité: 19.05.2023 FR 2304990
(43) Date de publication de la demande: 04.12.2024
(73) Titulaire: Les Jardins de l'Orbrie, 79300 Bressuire (FR)
(72) Inventeur: PENOT, David, 79300 BRESSUIRE (FR)
(74) Mandataire: Lequien, Philippe

(56) Documents cités:
- EP-A1- 3 725 162
- EP-B1- 3 716 781
- WO-A1-03/099043
- GB-A- 2 582 583
- US-A1- 2022 287 337

## Description

Le domaine de l'invention est celui de la production de jus de pomme.

L'invention concerne un procédé de production de jus de pomme permettant d'obtenir un jus de pomme présentant une teneur réduite en sucre.

Il existe une demande en jus de pomme moins sucrés.

Les jus de fruits, qualifiés « jus », ne contiennent que des sucres naturellement présents dans les fruits, et pas de sucre ajouté. En conséquence, il peut paraître compliqué de réduire le taux de sucre dans un jus sans le dénaturer.

On connaît des jus de fruits moins sucrés grâce à l'adjonction à un jus de fruits initial d'un autre jus moins sucré issus d'autres fruits, par exemple de l'eau de coco rajoutée dans un jus de pomme.

On connait également du document de brevet publié sous le numéro EP3716781A1, un procédé de production d'un jus de pomme à teneur réduite en sucre, dans lequel les constituants du fruit sont pressés, en particulier après un broyage ou un fractionnement partiel pour obtenir le jus de fruit.

Dans ce procédé une partie du jus obtenu à partir de la pulpe de fruit pressée est soumise à un processus de désucrage partiel ou total.

Avant le pressage, la peau du fruit est retirée par pelage.

Après l'enlèvement de la peau, une couche supérieure de la pulpe sur la périphérie du fruit est séparée d'une zone centrale de la pulpe.

Ensuite, la peau est soumise à un premier pressage ou à un pressage avec seulement une partie de la pulpe, et la couche supérieure de la pulpe est soumise à un deuxième pressage distinct du premier pressage.

Il est obtenu deux jus, dont un premier issu au moins partiellement du pressage de la peau présente une faible teneur en sucre, et un second issu du pressage de la couche supérieure de la pulpe.

Le second jus est alors soumis à processus de désucrage, par exemple par nanofiltration ou par diafiltration, pour réduire sa teneur en sucre, puis est mélangé au premier jus pour produire un jus de pomme à teneur réduite en sucre.

Un tel processus de désucrage par filtration peut apparaître complexe.

Selon les deux exemples précédemment décrits, les jus de pomme produits peuvent présenter jusqu'à 30 % de sucres en moins mais peuvent perdre leur dénomination de vente « jus ».

L'invention a notamment pour objectif de pallier ces inconvénients de l'art antérieur.

Plus précisément, l'invention a pour objectif de proposer une technique de production d'un jus de pomme présentant une teneur réduite en sucre.

L'invention a également pour objectif de fournir une telle technique qui permette d'obtenir un produit ne dénaturant pas la nature du jus de pomme par l'adjonction d'autres produits.

L'invention a encore pour objet de fournir une telle technique qui n'implique pas des méthodes de désucrage complexes.

Ces objectifs, ainsi que d'autres qui apparaîtront par la suite, sont atteints grâce à l'invention qui a pour objet un procédé de production de jus de pomme à teneur réduite en sucre comprenant :
- une étape de transformation de pommes à l'issue de laquelle on obtient un jus de pomme, nommé jus primaire, et une drêche de pomme ;
caractérisé en ce qu'il comprend :
- une étape de séchage de la drêche de pomme à l'aide d'un flux d'air, le flux d'air étant chargé en vapeurs à l'issue de l'étape de séchage ;
- une étape de production d'un jus secondaire par condensation des vapeurs du flux d'air ;
- une étape d'incorporation du jus secondaire dans le jus primaire pour obtenir un jus de pomme final.

Grâce au procédé selon l'invention, il est possible d'obtenir simplement un jus de pomme présentant une teneur réduite en sucre qui ne dénature pas la nature du jus de pomme.

En effet, le jus secondaire obtenu par la condensation des vapeurs du flux d'air utilisé pour sécher la drêche de pomme garde des propriétés recherchées du jus de pomme tout en évitant de présenter un taux de sucre important.

Par rapport à un jus de pomme issus du simple pressage de pommes, le jus de pomme final présente en moyenne un taux de sucre inférieur de l'ordre de 30 %.

Selon une caractéristique avantageuse, lors de l'étape de transformation de pommes, les pommes sont râpées pour séparer une chair de pomme, une peau, des pépins et un pédoncule,
et en ce que :
- la chair de pomme est pressée pour obtenir le jus primaire ;
- la peau, les pépins et le pédoncule sont regroupés pour former la drêche de pomme.

La drêche de pomme comprend alors des constituants peu sucrés permettant d'obtenir un jeu secondaire également peu sucré.

Avantageusement, lors de l'étape de séchage, la drêche de pomme est fluidisée en étant vibrée.

Le séchage de la drêche de pomme, ainsi fluidisée, permet d'extraire de manière douce l'humidité résiduelle dans la drêche de pomme par le flux d'air qui se charge en vapeur. Ce séchage est particulièrement doux, et ce notamment par rapport à des techniques de séchage réalisées à haute température, du fait que grâce à la fluidification de la drêche de pomme, un flux d'air à une faible température arrive à réaliser une extraction satisfaisante des vapeurs.

Selon un mode de réalisation préféré, lors de l'étape de séchage, la drêche de pomme est approvisionnée à une extrémité d'un support vibrant, et est séchée en circulant sur le support vibrant jusqu'à une autre extrémité du support vibrant où elle est évacuée.

Le séchage de la drêche de pomme est alors réalisé de manière continue.

Préférentiellement, lors de l'étape de séchage, le flux d'air est injecté sous la drêche de pomme.

Le flux d'air sèche alors la drêche de pomme en passant au travers de la drêche de pomme.

Dans le cas où la drêche de pomme est fluidisée, la récupération de la vapeur est également optimisée du fait qu'une surface de contact très importante est formée. De cette manière, on optimise la récupération de la vapeur d'eau.

Préférentiellement, le support vibrant comprend une plaque présentant des perforations sur laquelle la drêche de pomme est positionnée, le flux d'air étant injecté au travers des perforations.

Le séchage de la drêche de pomme et le chargement du flux d'air en vapeur sont également optimisés.

Avantageusement, lors de l'étape de séchage, le flux d'air est préalablement chauffé et asséché.

La capacité du flux d'air à se charger en vapeur grâce au séchage de la drêche de pomme est améliorée.

On évite aussi de condenser de la vapeur qui n'est pas issue du séchage de la drêche de pomme.

Selon une caractéristique avantageuse, lors de l'étape de séchage, le flux d'air est chauffé à une température comprise entre 30°C et 45°C, préférentiellement entre 35°C et 40°C.

Le séchage est alors particulièrement doux et respecte la nature des composants de la drêche de pomme qui sont extraits.

Avantageusement, lors de l'étape de production, le flux d'air est insufflé dans un circuit condensateur refroidit à une température comprise en 1°C et 10°C, préférentiellement à 4°C.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- [Fig. 1] la figure 1 est une représentation schématique d'un procédé de production de jus de pomme à teneur réduite en sucre, selon l'invention ;
- [Fig. 2] la figure 2 est une représentation schématique d'une installation de production de jus de pomme à teneur réduite en sucre.

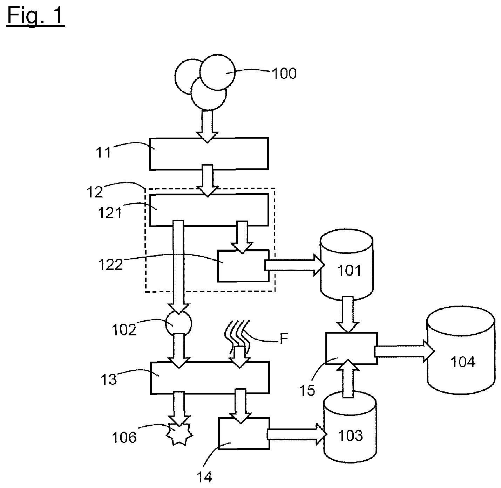

En référence à la figure 1, un procédé de production de jus de pomme à teneur réduite en sucre, selon l'invention est représenté.

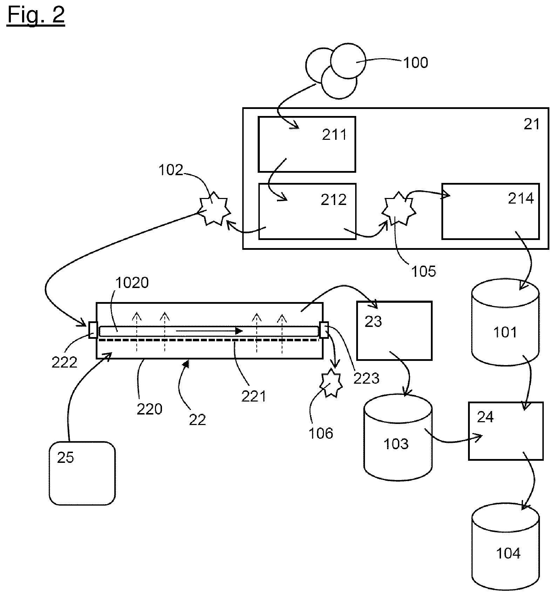

Ce procédé de production est mis en oeuvre dans l'installation de production de jus de pomme représentée sur la figure 2.

L'installation ne fait pas partie de l'invention mais représente, en tant que tel, un élément de l'état de la technique qui est utile à la compréhension de l'invention.

Le procédé et l'installation sont décrits ci-après en référence à leurs figures respectives.

Le procédé de production de jus de pomme à teneur réduite en sucre comprend :
- une étape de préparation 11 de pommes 100 ;
- une étape de transformation 12 des pommes 100 à l'issue de laquelle on obtient un jus de pomme, nommé jus primaire 101, et une drêche de pomme 102 ;
- une étape de séchage 13 de la drêche de pomme 102 à l'aide d'un flux d'air F ;
- une étape de production 14 d'un jus secondaire 103 par condensation de vapeurs du flux d'air F ;
- une étape d'incorporation 15 du jus secondaire 103 dans le jus primaire 101 pour obtenir un jus de pomme final 104.

L'étape de préparation 11 de pommes 100 consiste à nettoyer les pommes 100. Lors de cette étape, les pommes 100 sont brossées et polies.

Lors de l'étape de transformation 12 des pommes 100, les pommes 100 sont râpées pour séparer une chair de pomme 105 (illustrée par la figure 2), une peau, des pépins et un pédoncule. La chair de pomme 105 est ensuite pressée.

Plus précisément, l'étape de transformation 12 comprend une sous-étape de raffinage 121 au cours de laquelle les pommes 100 sont râpées, et une sous-étape de pressage 122.

Pendant la sous-étape de raffinage 121, les pommes 100 sont progressivement mises en morceaux et ces morceaux sont séparés en fonction de leur nature. La peau, les pépins et les pédoncules des pommes 100 sont regroupés pour former la drêche de pomme 102.

La sous-étape de pressage 122 consiste à presser la chair de pomme 105 pour en extraire du jus. Ce jus est nommé jus primaire 101.

Lors de l' étape de séchage 13 de la drêche de pomme 102, le flux d'air F utilisé pour sécher la drêche de pomme 102 se charge en vapeurs.

En effet, la drêche de pomme 102 issue de l'étape de transformation 12 est humide, et cette humidité est transférée dans le flux d'air F.

Le flux d'air F est injecté sous la drêche de pomme 102.

Le flux d'air F remonte au travers de la drêche de pomme 102 pour la sécher. Ce flux d'air F est ensuite capté pour l'étape de production 14.

Préalablement à l'injection du flux d'air F, ce flux d'air F est chauffé et asséché. Le flux d'air est notamment chauffé à une température comprise entre 30°C et 45°C, et préférentiellement entre 35°C et 40°C. Ces gammes de température, et notamment la gamme préférentielle, permettent d'éviter de dénaturer les composants de la drêche de pomme 102 qui sont captés dans le flux d'air F.

A l'issue de l'étape de séchage 13, on obtient des résidus secs 106 de drêche de pomme 102.

Lors de l'étape de séchage 13, la drêche de pomme 102 est fluidisée en étant vibrée. La drêche de pomme 102 est notamment vibrée en étant positionnée sur un support 221 vibrant.

Cette étape de séchage 13 est réalisé en flux continu.

L'installation 2 de production comprend :
- un poste de transformation 21 de pommes 100 produisant le jus primaire 101, et la drêche de pomme 102 ;
- un poste de séchage 22 de la drêche de pomme 102 à l'aide du flux d'air F ;
- un poste de condensation 23 d'une vapeur chargée dans le flux d'air F issu du poste de séchage 22 pour produire le jus secondaire 103 ;
- un poste d'incorporation 24 du jus secondaire 103 dans le jus primaire 101 pour obtenir le jus de pomme final 104.

Le poste de transformation met en oeuvre l'étape de préparation 11 et l'étape de transformation 12 du procédé.

Plus précisément, le poste de transformation 21 comprend des moyens de brossage et de polissage 211 réalisant l'étape de préparation 11, des moyens de raffinage 212 réalisant la sous-étape de raffinage 121, et des moyens de pressage 214 réalisant la sous-étape de pressage 122.

Les moyens de raffinage 212 sont configurés pour mettre en morceaux les pommes 100, par exemple à l'aide de râpes, puis séparer les morceaux, par exemple à l'aide de tamis.

Au sortir des moyens de raffinage 212, la peau, les pépins et les pédoncules des pommes 100 sont regroupés pour former la drêche de pomme 102, qui est envoyée au poste de séchage 22, et la chair de pomme 105 est envoyée aux moyens de pressage 214 pour produire le jus primaire 101.

Le poste de séchage 22 comprend :
- un enceinte 220 ;
- le support 221 vibrant évoqué précédemment, ce support 221 vibrant étant logé dans l'enceinte 220 ;
- une entrée 222 par laquelle la drêche de pomme 102 est insérée dans l'enceinte 220 sur le support 221 vibrant ;
- une sortie 223 par laquelle la drêche de pomme 102, ayant circulée sur le support 221 est extraite, alors sous forme de résidus secs 106.

Tel qu'évoqué précédemment, un flux d'air F est injecté dans l'enceinte 220 pour sécher la drêche de pomme 102, et la drêche de pomme 102 est séchée en flux continu.

A cet effet, la drêche de pomme 102 est approvisionnée à une extrémité du support 221 vibrant et séchée en circulant sur le support 221 vibrant jusqu'à une autre extrémité du support 221 vibrant où elle est évacuée par la sortie 223.

Le support 221 vibrant comprend une plaque présentant des perforations permettant le passage du flux d'air F depuis un volume sous-jacent à la plaque jusqu'à un volume sus-jacent à la plaque. Le flux d'air est ainsi injecté dans la drêche de pomme 102 au travers des perforations de la plaque.

La drêche de pomme 102 est positionnée sur la plaque et forme le lit 1020 de drêche de pomme 102 destiné à être séché par le flux d'air F.

En étant mise en vibration, la plaque entraîne la vibration de la drêche de pomme 102 qu'elle porte, et ainsi sa fluidisation.

Tel que cela est illustré par les flèches en pointillées, le flux d'air F traverse alors ce lit de pomme 1020 en maximisant les zones d'interface entre l'air et la drêche de pomme 102, optimisant alors le séchage de la drêche de pomme 102 et la captation de l'humidité contenue dans de la drêche de pomme 102 par le flux d'air F.

L'installation comprend également un poste de génération 25 du flux d'air F. Ce poste de génération 25 est couplé à l'enceinte 220 pour insuffler le flux d'air sous le support 221 vibrant.

Ce poste de génération 25 est configuré pour chauffer et assécher le flux d'air F.

Le poste de génération 25 comprend :
- une entrée d'air permettant de capter un air ambiant ;
- des moyens de filtration permettant de filtrer des impuretés contenues dans l'air, telles que des poussières ;
- des moyens de ventilation permettant d'aspirer l'air ambiant par l'entrée d'air et de l'insuffler dans l'enceinte 220 ;
- des moyens de chauffage et d'asséchage du flux d'air F.

Les moyens de chauffage et d'asséchage prennent la forme d'un bruleur à gaz.

Pour améliorer l'efficacité énergétique du poste de génération 25, le flux d'air F est préchauffé au sein d'un échangeur de chaleur positionné sur une cheminée d'évacuation des gaz de combustion du bruleur à gaz.

Le poste de génération 25 est configuré de manière à ce que le flux d'air F soit chauffé à une température comprise entre 30°C et 45°C, et préférentiellement entre 35°C et 40°C.

Au sortir du poste de génération 25, le flux d'air F présente alors des caractéristiques de température et d'humidité favorisant le séchage et la captation de l'humidité contenue dans la drêche de pomme 102.

Par la suite, le flux d'air F ayant emmagasiné l'humidité résiduelle de la drêche de pomme 102 est utilisé dans le poste de condensation 23 qui met en oeuvre l'étape de production 14.

Le poste de condensation 23 comprend un circuit condensateur dans lequel le flux d'air F est insufflé.

Ce circuit condensateur est refroidit à une température comprise en 1°C et 10°C, et qui est préférentiellement de 4°C. Le circuit condensateur est par exemple refroidi à l'aide d'une eau glycolée.

Le condensat résultant du passage dans le circuit condensateur forme le jus secondaire 103.

Le poste d'incorporation 24, quant à lui, met en oeuvre l'étape d'incorporation 15.

Dans ce poste d'incorporation 24, tout ou partie du jus secondaire 103 est incorporée dans tout ou partie du jus primaire 101, permettant ainsi d'obtenir un jus de pomme final 104 présentant une teneur réduire en sucre par rapport à la teneur en sucre du jus primaire 101, le jus secondaire 103 étant particulièrement peu sucré du fait des constituants à partir desquels il est obtenu et la manière utilisée pour l'obtenir.

Le procédé selon l'invention et l'installation mettant en oeuvre le procédé permettent de produire un jus de pomme final à teneur réduite en sucre à partir uniquement de pommes, et n'impliquant pas de filtration du type nanofiltration ou diafiltration.

## Revendications

1. Procédé de production de jus de pomme à teneur réduite en sucre comprenant :
- une étape de transformation (12) de pommes (100) à l'issue de laquelle on obtient un jus de pomme, nommé jus primaire (101) , et une drêche de pomme (102) ;
**caractérisé en ce qu'**il comprend :
- une étape de séchage (13) de la drêche de pomme (102) à l'aide d'un flux d'air (F), le flux d'air (F) étant chargé en vapeurs à l'issue de l'étape de séchage (13) ;
- une étape de production (14) d'un jus secondaire (103) par condensation des vapeurs du flux d'air (F) ;
- une étape d'incorporation (15) du jus secondaire (103) dans le jus primaire (101) pour obtenir un jus de pomme final (104).

2. Procédé selon la revendication précédente, **caractérisé en ce que** lors de l'étape de transformation (12) de pommes (100), les pommes (100) sont râpées pour séparer une chair de pomme (105), une peau, des pépins et un pédoncule,
et **en ce que**:
- la chair de pomme (105) est pressée pour obtenir le jus primaire (101) ;
- la peau, les pépins et le pédoncule sont regroupés pour former la drêche de pomme (102).

3. Procédé selon l'une quelconque des revendications précédentes, **caractérisé en ce que**, lors de l'étape de séchage (13), la drêche de pomme (102) est fluidisée en étant vibrée.

4. Procédé selon la revendication précédente, **caractérisé en ce que**, lors de l'étape de séchage (13), la drêche de pomme (102) est approvisionnée à une extrémité d'un support (221) vibrant, et est séchée en circulant sur le support vibrant jusqu'à une autre extrémité du support vibrant où elle est évacuée.

5. Procédé selon l'une quelconque des revendications précédentes, **caractérisé en ce que** lors de l'étape de séchage, le flux d'air est injecté sous la drêche de pomme.

6. Procédé selon les revendications 4 et 5, **caractérisé en ce que** le support (221) vibrant comprend une plaque présentant des perforations sur laquelle la drêche de pomme est positionnée, le flux d'air étant injecté au travers des perforations.

7. Procédé selon l'une quelconque des revendications précédentes, **caractérisé en ce que**, lors de l'étape de séchage, le flux d'air est préalablement chauffé et asséché.

8. Procédé selon la revendication précédente, **caractérisé en ce que**, lors de l'étape de séchage, le flux d'air est chauffé à une température comprise entre 30°C et 45°C, préférentiellement entre 35°C et 40°C.

9. Procédé selon l'une quelconque des revendications précédentes, **caractérisé en ce que**, lors de l'étape de production, le flux d'air est insufflé dans un circuit condensateur refroidit à une température comprise en 1°C et 10°C, préférentiellement à 4°C.

## Patentansprüche

1. Verfahren zur Herstellung von zuckerreduziertem Apfelsaft, umfassend:
- einen Schritt des Verarbeitens (12) von Äpfeln (100), an dessen Ende ein Apfelsaft, der Primärsaft (101), und Apfeltrester (102) erhalten werden;
**dadurch gekennzeichnet, dass** er Folgendes umfasst:
- einen Schritt des Trocknens (13) des Apfeltrebers (102) unter Verwendung eines Luftstroms (F), wobei der Luftstrom (F) am Ende des Trocknungsschritts (13) mit Dämpfen beladen ist;
- einen Schritt des Herstellens (14) eines Sekundärsafts (103) durch Kondensation der Dämpfe des Luftstroms (F);
- einen Schritt des Einarbeitens (15) des Sekundärsafts (103) in den Primärsaft (101), um einen endgültigen Apfelsaft (104) zu erhalten.

2. Verfahren nach dem vorhergehenden Anspruch, **dadurch gekennzeichnet, dass** beim Schritt des Verarbeitens (12) von Äpfeln (100) die Äpfel (100) gerieben werden, um Apfelfleisch (105), Schale, Kerne und Stiel zu trennen, und dadurch, dass:
- das Apfelfleisch (105) gepresst wird, um den Primärsaft (101) zu erhalten;
- Schale, Kerne und Stiel zusammengefasst werden, um die Apfeltrester (102) zu bilden.

3. Verfahren nach einem der vorhergehenden Ansprüche, **dadurch gekennzeichnet, dass** beim Trocknungsschritt (13) die Apfeltrester (102) durch Vibrieren fluidisiert werden.

4. Verfahren nach dem vorhergehenden Anspruch, **dadurch gekennzeichnet, dass** beim Trocknungsschritt (13) die Apfeltrester (102) an einem Ende eines vibrierenden Trägers (221) zugeführt und getrocknet werden, indem sie auf dem vibrierenden Träger zu einem anderen Ende des vibrierenden Trägers transportiert werden, wo sie abgeführt werden.

5. Verfahren nach einem der vorhergehenden Ansprüche, **dadurch gekennzeichnet, dass** während des Trocknungsschritts der Luftstrom unter die Apfeltrester eingeblasen wird.

6. Verfahren nach den Ansprüchen 4 und 5, **dadurch gekennzeichnet, dass** der vibrierende Träger (221) eine Platte mit Perforationen umfasst, auf der die Apfeltrester positioniert sind, wobei der Luftstrom durch die Perforationen eingeblasen wird.

7. Verfahren nach einem der vorhergehenden Ansprüche, **dadurch gekennzeichnet, dass** beim Trocknungsschritt der Luftstrom vorher erwärmt und getrocknet wird.

8. Verfahren nach dem vorhergehenden Anspruch, **dadurch gekennzeichnet, dass** beim Trocknungsschritt der Luftstrom auf eine Temperatur zwischen 30 °C und 45 °C, vorzugsweise zwischen 35 °C und 40 °C, erwärmt wird.

9. Verfahren nach einem der vorhergehenden Ansprüche, **dadurch gekennzeichnet, dass** beim Herstellungsschritt der Luftstrom in einen Kondensatorkreislauf geblasen wird, der auf eine Temperatur zwischen 1 °C und 10 °C, vorzugsweise auf 4 °C, gekühlt ist.

## Claims

1. A method for producing low-sugar apple juice comprising:
- a step of processing (12) apples (100) at the end of which an apple juice, called primary juice (101), and an apple pomace (102) are obtained;
**characterised in that** it comprises:
- a step of drying (13) the apple pomace (102) using an air flux (F), the air flux (F) being loaded with vapours at the end of the drying step (13);
- a step of producing (14) a secondary juice (103) by condensing the vapours of the air flux (F);
- a step of incorporating (15) the secondary juice (103) into the primary juice (101) to obtain a final apple juice (104).

2. The method according to the preceding claim, **characterised in that** during the step of processing (12) apples (100), the apples (100) are grated to separate an apple flesh (105), a skin, pips and a stem,
and **in that**:
- the apple flesh (105) is squeezed to obtain the primary juice (101);
- the skin, pips and stem are gathered to form the apple pomace (102).

3. The method according to any one of the preceding claims, **characterised in that**, during the drying step (13), the apple pomace (102) is fluidised while being vibrated.

4. The method according to the preceding claim, **characterised in that**, during the drying step (13), the apple pomace (102) is supplied at an end of a vibrating support (221), and is dried by circulating on the vibrating support to another end of the vibrating support where it is discharged.

5. The method according to any one of the preceding claims, **characterised in that** during the drying step, the air flux is injected under the apple pomace.

6. The method according to claims 4 and 5, **characterised in that** the vibrating support (221) comprises a plate having perforations on which the apple pomace is positioned, the air flux being injected through the perforations.

7. The method according to any one of the preceding claims, **characterised in that**, during the drying step, the air flux is previously heated and desiccated.

8. The method according to the preceding claim, **characterised in that**, during the drying step, the air flux is heated to a temperature between 30°C and 45°C, preferably between 35°C and 40°C.

9. The method according to any one of the preceding claims, **characterised in that**, during the production step, the air flux is blown into a condensing circuit cooled to a temperature between 1°C and 10°C, preferably to 4°C.
